# EUROPEAN PATENT APPLICATION

(11) **EP 3 379 167 A1**
(43) Date of publication of application: **26.09.2018**
(21) Application number: 17425034.0
(22) Date of filing: 23.03.2017
(51) Int. Cl.: F24J 2/52, H02S 20/22, F24J 2/54

(54) **APPARATUS FOR CONVERSION OF SOLAR ENERGY, AND METHOD FOR INSTALLING SAID APPARATUS**

(71) Applicant: Lanteri, Emanuele, 28921 Verbania (IT)
(72) Inventor: Lanteri, Emanuele, 28921 Verbania (IT)
(74) Representative: Baroni, Matteo

(57) **Abstract**

Apparatus for the conversion of solar energy comprising: at least a first solar panel (10) and a second solar panel (20); a support structure (100) supporting said first solar panel (10) and said second solar panel (20). The support structure (100) comprises: a first fixing portion (110) having a substantially planar development and provided with a through hole (111) for accommodating a tie rod for fastening to a vertical wall; a first arm (120), having a first end (120a) hinged to said first fixing portion (110), and a second end (120b); a second arm (130), having a first end (130a) hinged to the second end (120b) of said first arm (120), and a second end (130b); a second fixing portion (140) hinged to the second end (130b) of said second arm (130), wherein said second fixing portion (140) has a substantially planar development and is provided with a through hole (141) for accommodating a tie rod for fastening to a vertical wall.

## Description

### Scope of the invention

The present invention relates to an apparatus for the conversion of solar energy.

The invention also relates to a method for installing said apparatus.

### Background art

Typically, conversion panels of solar energy are adapted for the generation of electricity, for example by photovoltaic conversion, or for the generation of thermal energy for heating fluids, such as water. These panels can be mounted on roofs of buildings, on the vertical walls of the buildings themselves, or on structures suitably arranged on the ground.

Solutions for mounting on vertical walls are described in European patent application no. EP13161458.8, on behalf of the same Applicant. The Applicant has however noted that, in this specific technical field, it was possible to make a series of improvements to the manner in which the panels are fixed to the vertical walls of buildings.

### Summary of the invention

The object of the present invention is to provide an apparatus for the conversion of solar energy that allows a quick and reliable fixing to a vertical wall.

Another object of the invention is to provide an apparatus for the conversion of solar energy in which the support structure of the panels has low structural complexity and low implementation costs. These and yet other objects are substantially achieved by an apparatus for the conversion of solar energy and a method for installing said apparatus as described in the appended claims.

### Brief description of the figures

Further features and advantages will appear more clearly from the detailed description of exemplary and non-exclusive embodiments of the invention. This description is given hereinafter with reference to the accompanying figures, also provided only for illustrative and nonlimiting purposes, in which:
- figure 1 shows a lateral view of an apparatus according to the present invention, in use conditions;
- figure 2 shows a plan view of an element that is part of the apparatus in figure 1;
- figure 3 shows an enlargement of a part of figure 2;
- figure 4 shows a perspective view of a detail of the apparatus in figure 1;
- figures 5a-5c show respective orthogonal projections of an element that is part of the apparatus in figure 1; it is noted that figure 5c partially shows also an additional element;
- figure 6a shows a schematic front view of a panel that is part of the apparatus in figure 1;
- figure 6b shows a schematic rear view of the panel in figure 6a;
- figure 6c shows a transversal section of the panel in figure 6b according to line B-B;
- figure 6d shows a transversal section of the panel in figure 6b according to line A-A;
- figure 7 schematically shows a front view of the apparatus in figure 1;
- figures 8a-8c show respective orthogonal projections of an element that is part of the apparatus in figure 1;
- figures 9a-9c show respective orthogonal projections of an element that is part of the apparatus in figure 1.

### Detailed description of embodiments of the invention

With reference to the accompanying figures, reference numeral 1 generally identifies an apparatus for the conversion of solar energy according to the present invention.

Apparatus 1 is intended for receiving solar radiation and convert the same, in a manner known per se, into electricity and/or heat, for example by heating a thermal fluid.

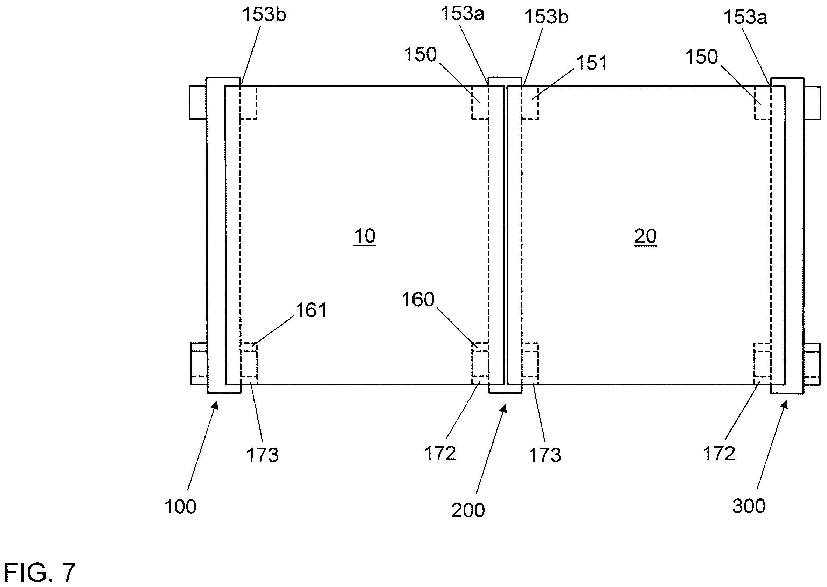

Apparatus 1 comprises at least a first solar panel 10 and a second solar panel 20 (figure 7).

In general, apparatus 1 may comprise a larger number of solar panels.

Preferably, the solar panels forming part of apparatus 1 are arranged in one of multiple rows. The different rows are preferably parallel to each other.

The solar panels belonging to a same row are juxtaposed to one another. In particular, the solar panels may have a substantially rectangular profile.

For simplicity, figure 7 only shows one row of solar panels; as mentioned, however, apparatus 1 may also comprise a plurality of rows of solar panels.

To better clarify the features of the invention, focus will now be on the first solar panel 10 and the second solar panel 20.

It should be noted that the first and the second solar panel 10, 20, are substantially identical to each other, and represent any pair of adjacent panels of apparatus 1.

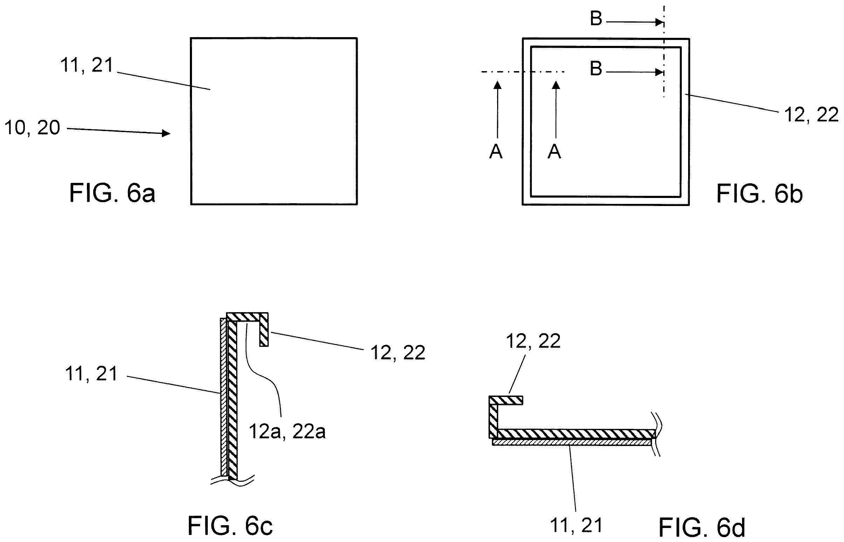

The first solar panel 10 comprises an active portion 11 and a frame 12 (figures 6a-6d).

The active portion 11 is intended for receiving solar radiation and contributing to the conversion of the same. In the case of photovoltaic solar panels, the active portion 11 may consist of a silicon module, through which the solar radiation is converted into electricity. In the case of thermal solar panels, the active portion 11 may be implemented as an absorption module which absorbs solar radiation and conveys it to a heat exchanger, for heating a thermal fluid.

Frame 12 surrounds and supports the active portion 12.

Frame 12 has a substantially rectangular or square profile. Figures 6a-6b show a schematic front view and a schematic rear view of frame 12, respectively.

Frame 12 has a double peripheral bending, preferably along each of the four sides.

Figures 6c-6d show such a double bending. In particular, figure 6c schematically shows, on an enlarged scale, a sectional view taken along line B-B of frame 12 in figure 6b; figure 6d schematically shows, on an enlarged scale, a sectional view according to line A-A of frame 12 in figure 6b.

As mentioned, the second solar panel 20 has a structure and operation substantially identical with respect to the first solar panel 10.

The second solar panel 20 comprises an active portion 21 and a frame 22.

Figures 6a-6d also show frame 22 of the second solar panel 20.

In order to fix the first solar panel 10 and the second solar panel 20, apparatus 1 comprises at least a first support structure 100.

Preferably, as shown in figure 7, apparatus 1 comprises a plurality of support structures 100, 200, 300.

All support structures 100, 200, 300 preferably have the same structure and operation.

The support structures positioned at the ends of the row of panels may have different structure/shape than the others, as they must support only one panel.

One of said support structures, i.e. the support structure 100, will now be described in detail.

This description applies to all the support structures that are interposed between two adjacent solar panels, forming part of apparatus 1.

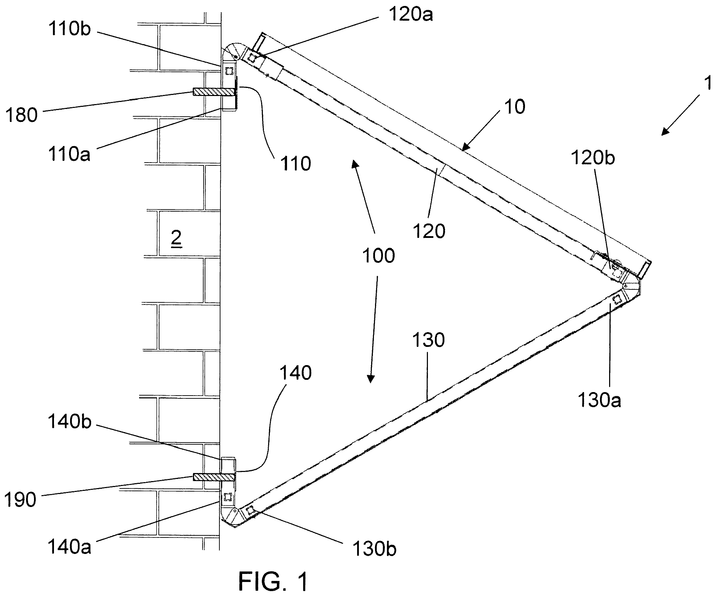

The support structure 100 (figures 1-3) comprises a first fixing portion 110. The first fixing portion 110 has a substantially planar development and is provided with a through hole 111. As will be clearer hereinafter, the through hole 111 is intended for accommodating a tie-rod 180, so that apparatus 1 is fixed to a vertical wall.

Preferably, the first fixing portion 110 is formed as a box-shaped element, for example of aluminium. In order to confer greater rigidity and resistance to strains at the through hole 111, it is contemplated that a bushing is inserted in said through hole 111.

The first fixing portion has a first end 110a and a second end 110b. The first end 110a of the first fixing portion 110 may be substantially free.

The second end 110b of the first fixing portion 110 is hinged to the first arm 120, which will be described hereinafter.

The support structure 100 comprises a first arm 120.

The first arm 120 has a first end 120a, hinged to the first fixing portion 100, and in particular to the second end 110b of the first fixing portion 110, and a second end 120b.

Preferably, the first arm 110 is formed as a box-shaped element, for example of aluminium.

Preferably, the support structure 100 comprises a first pair of tabs 150, 151 (figures 1-2, 5a-5c) extending away from opposite sides of the first arm 120.

Preferably, tabs 150, 151 are made in one piece.

Preferably, tabs 150, 151 of said first pair of tabs are joined by a fitting 152 substantially shaped as a "U". Advantageously, fitting 152 is counter-shaped to part of the outer contour of the first arm 120.

Preferably, the first arm 120 has an upper wall 121, two lateral walls 122, 123 and a lower wall 124. In one embodiment, the first arm 120 has, in cross section, a substantially rectangular profile, delimited by the above walls 121-124.

Preferably, fitting 152 is counter-shaped to the lateral walls 122, 123 and to the lower wall 124.

Preferably, tabs 150, 151 are substantially parallel and non-coplanar with respect to the upper wall 121 of the first arm 120.

In other words, tabs 150, 151 are spaced from the upper wall 121 of the first arm 120. Such a distance is preferably equal or very close (taking due account of tolerances) to the thickness of the portion of frame 12, 22 that will be inserted between tabs 150, 151 and the upper wall of the first arm 120.

Preferably, each of tabs 150, 151 of said first pair of tabs has an engagement portion 150a, 151a constrained to a respective engagement portion 152a, 152b of fitting 152.

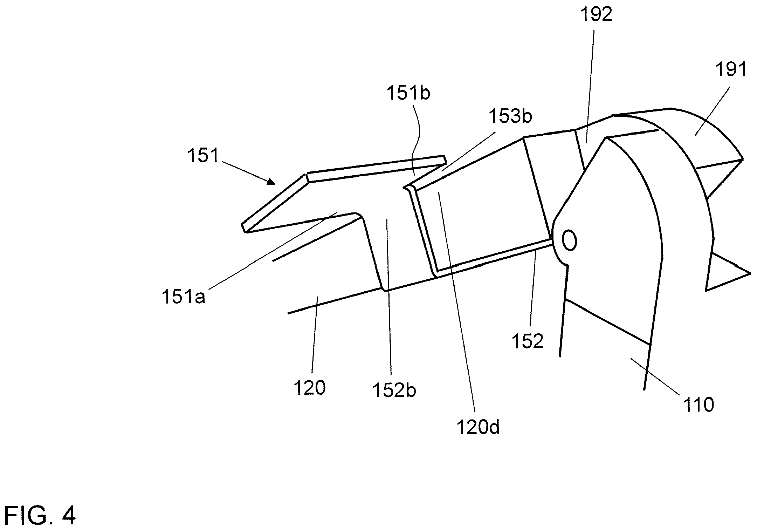

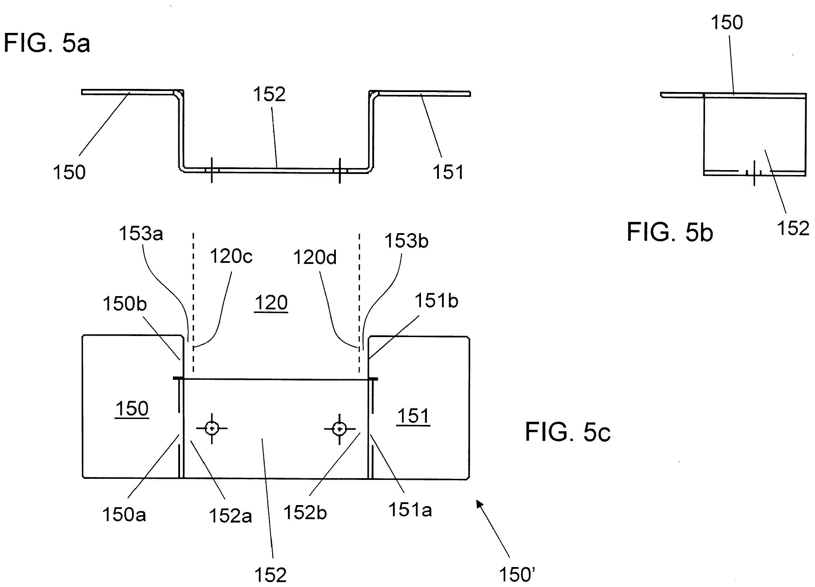

Preferably, each of tabs 150, 151 also has a free portion 150b, 151b, that is, a portion not in contact with fitting 152. Each free portion 150b, 151b defines, in cooperation with a corresponding portion 120c, 120d of the first arm 120, a housing 153a, 153b (figures 4, 5c).

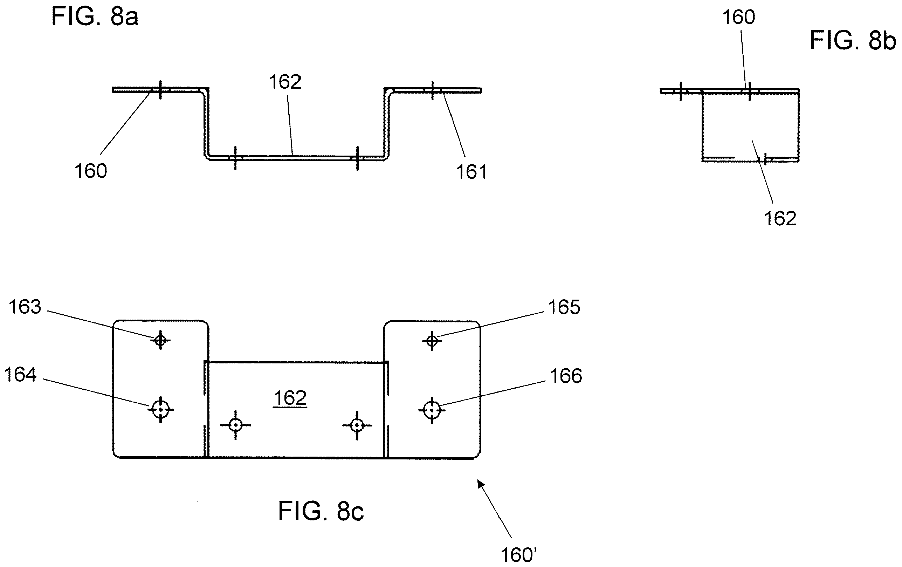

Housings 153a, 153b accommodate frame 12 of the first solar panel 10 and frame 22 of the second solar panel 20, respectively. Preferably, the support structure 100 comprises a second pair of tabs 160, 161 (figures 1-3, 8a-8c).

Tabs 160, 161 of the second pair extend away from opposite sides of the first arm 120.

Preferably, tab 160 and tab 150 extend from the same side of the first arm 120. In particular, these tabs 150, 160 extend from the junction area between the upper wall 121 and the lateral wall 122 of the first arm 120.

Preferably, tab 161 and tab 151 extend from the same side of the first arm 120. In particular, these tabs 151, 161 extend from the junction area between the upper wall 121 and the lateral wall 123 of the first arm 120.

Preferably, tabs 160, 161 of the second pair are made in one piece.

Preferably, tabs 160, 151 of the second pair of tabs are joined by a fitting 162 substantially shaped as a "U". Advantageously, fitting 162 is counter-shaped to part of the outer contour of the first arm 120. More particularly, fitting 162 is counter-shaped to the lateral walls 122, 123 and to the lower wall 124 of the first arm 120.

Preferably, tabs 160, 161 are substantially parallel and non-coplanar with respect to the upper wall 121 of the first arm 120.

In other words, tabs 160, 161 are spaced from the upper wall 121 of the first arm 120.

Preferably, the assembly 150' formed by the first pair of tabs 150, 151 and by fitting 152 has the same shape and size as the assembly 160' formed by the second pair of tabs 160, 161 and by fitting 162.

Preferably, the only difference between assembly 150' and assembly 160' is the presence, on tabs 160, 161, of holes 163, 164; 165, 166 which will be described hereinafter.

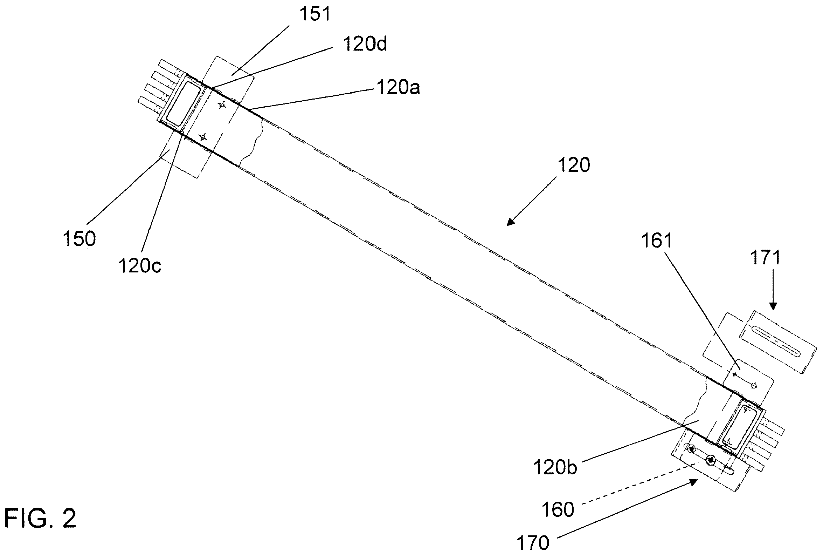

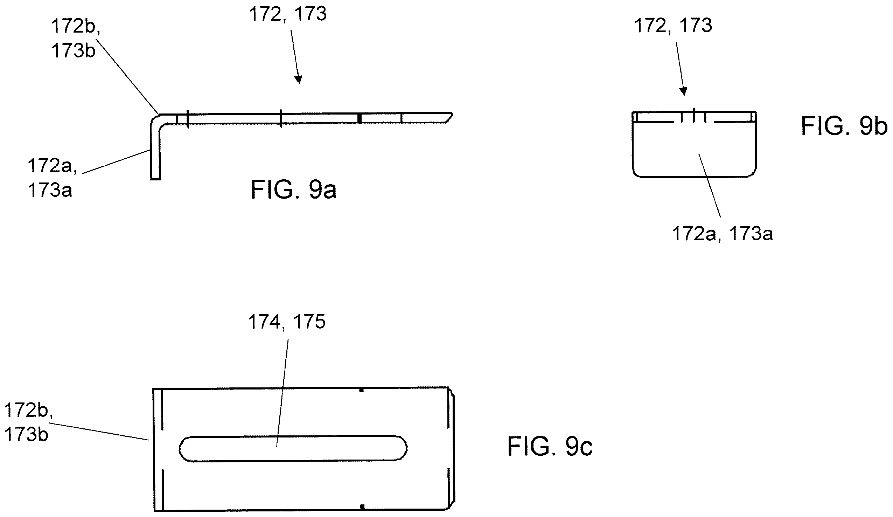

Preferably, the support structure 100 comprises a pair of adapter elements 170, 171 (figures 2-3, 9a-9c).

Each adapter element 170, 171 is mounted on a respective tab 160, 161 of the second pair of tabs and is movable with respect to said respective tab 160, 161.

Preferably, each adapter element 170, 171 comprises a plate 172, 173 having a through recess 174, 175.

Preferably, each adapter element comprises a pair of clamping elements 176, 177; 178, 179, inserted into recess 174, 175 and in respective through holes 163, 164; 165, 166 formed in the respective tab 160, 161.

In essence, plates 172, 173 are intended for adapting the support structure 100, and in particular tabs 160, 161 of the second pair, to the length of the first panel 10 and the second panel 20. After the correct position of plates 172, 173 has been identified, the same plates 172, 173 are fixed via the clamping elements 176, 177; 178, 179.

Each clamping element 176-179 can be implemented by means of a screw, a nut and preferably a washer.

Preferably, each plate 172, 173 has a respective retainer portion 172a, 173a. The retainer portion 172a, 173a may be implemented, for example, through a bending, at an axial end 172b, 173b of plate 172, 173 itself. Such an axial end is identified as the end of plate 172, 173 which, after the support structure 100 has been fixed to a vertical wall, is located at a greater height with respect to the ground.

The support structure 100 comprises a second arm 130 (figures 1-2). The second arm 130 has a first end, hinged to the second end 120b of the first arm 120, and a second end 130b.

Preferably, the second arm 130 is formed as a box-shaped element, for example of aluminium.

Preferably, the second arm 130 has a shape and dimensions substantially equal to the first arm 120.

Preferably, the second arm 130 has a shape and size substantially equal to the first arm 130.

Preferably, the second arm 130 has, in cross section, a substantially rectangular profile.

Preferably, the second arm 130 comprises an upper wall 131, two lateral walls 132, 133 and a lower wall 134.

Preferably, the upper wall 131 of the second arm 130 faces the lower wall 124 of the first arm 120.

The support structure 100 comprises a second fixing portion 140 (figures 1-2). The second fixing portion 140 has a substantially planar development and is provided with a through hole 141. As will be clearer hereinafter, the through hole 141 is intended for accommodating a tie-rod 190, so that apparatus 1 is fixed to a vertical wall.

Preferably, the second fixing portion 140 is formed as a box-shaped element, for example of aluminium. In order to confer greater rigidity and resistance to strains at the through hole 141, it is contemplated that a bushing is inserted in said through hole 141.

Preferably, the second fixing portion 140 has the same shape and size as the first fixing portion 110.

The second fixing portion 140 has a first end 140a and a second end 140b.

The first end 140a of the second fixing portion 140 is hinged to the second end 130b of the second arm 130.

The second end 140b of the second fixing portion 140 can be substantially free.

As mentioned, the first fixing portion 110, the first arm 120, the second arm 130 and the second fixing portion 140 are constrained by means of hinges.

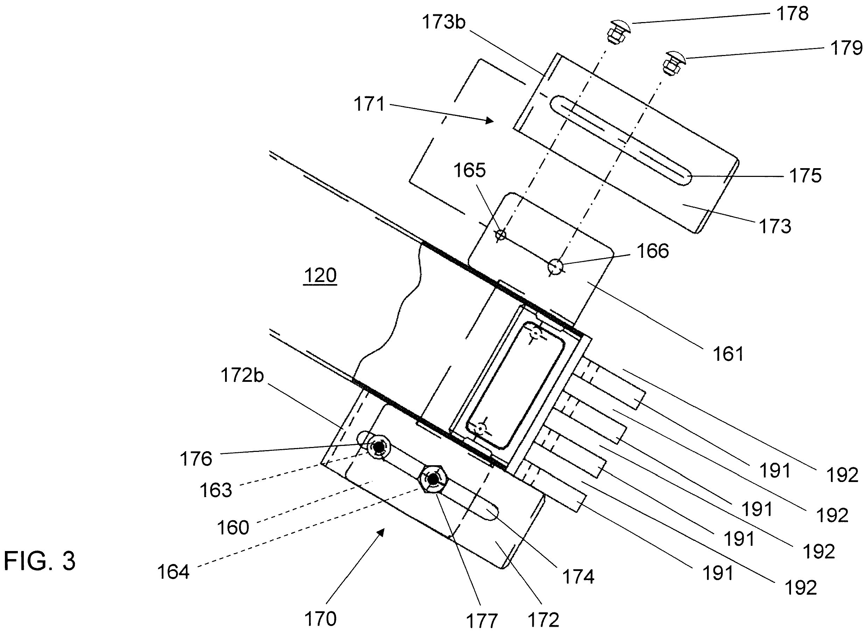

Preferably, such hinges are each associated with a pair of combs, substantially equal to one another but axially staggered, so that the teeth of one comb are inserted into the cavities interposed between the teeth of the other comb. By way of example, figure 3 shows teeth 191 and the relative empty spaces or cavities 192 of the comb present at the second end 120b of the first arm 120. The second arm 130 has, at the first end thereof, a plurality of teeth which are inserted into the empty spaces or cavities 192, and a plurality of empty spaces or cavities in which teeth 191 mounted at the second 120b ends of the first arm 120 are fitted.

It should be noted that the number of teeth and respective empty spaces or cavities may also be larger or smaller than shown in the accompanying figures.

When apparatus 1 is to be mounted on a vertical wall, the following steps are preferably carried out.

The support structure 100 is first arranged.

A tie rod 180 is inserted into the through hole 111 of the first fixing portion 110. The tie rod 180 is driven in the vertical wall 2, so as to fix the latter to the first fixing portion 110.

A tie rod 190 is inserted into the through hole 141 of the second fixing portion 140. The tie rod 190 is driven in the vertical wall 2, so as to fix the latter to the second fixing portion 140.

It is noted that, in the present example, tie rods 180, 190 are fixed to the same vertical wall 2. However, it is contemplated that they may be fixed to different vertical walls and/or separate from each other, provided that these vertical walls are suitable for supporting apparatus 1.

By virtue of the fact that the first fixing portion 110 is hinged to the first arm 120, the first arm 120 is hinged to the second arm 130 and the second arm 130 is hinged to the second fixing portion 140, it is possible to freely define the inclination of the first arm 120 with respect to the vertical wall 2 (and with respect to the ground), before at least one of the two tie rods 180, 190 is fixed to the wall. This inclination will then define the orientation of the solar panels that will be mounted on the support structure 100.

The support structure 100 is fixed to the vertical wall 2 so that the first fixing portion 110 and the second fixing portion 140 are oriented in a vertical direction, adhering to the vertical wall 2 itself (figure 1). Preferably, the second end 110b of the first fixing portion 110 is located at greater height from the ground than the first end 110a of the first fixing portion 110.

Preferably, the second end 140b of the second fixing portion 140 is located at greater height from the ground than the first end 140a of the second fixing portion 140.

Preferably, the lower wall 124 of the first arm 120 faces the upper wall 131 of the second arm 130.

After the support structure 100 has been fixed to the vertical wall 2, the first solar panel 10 and the second solar panel 20 can be mounted on the support structure 100.

Preferably, before mounting the first solar panel 10, a second support structure 200, entirely identical to the first support structure 100 (figure 7), is fixed to the vertical wall 2 (or to another suitable vertical wall).

The first solar panel 10 is then mounted on the first support structure 100 and on the second support structure 200.

In particular, frame 12 of the first solar panel 10 is inserted into housing 153b of the first support structure 100 and housing 153a of the second support structure 200.

Alternatively, the first solar panel 10 may be initially mounted on the first support structure 100 alone, when the second support structure 200 is not yet fixed to wall 2. The second support structure 200 can then be fixed to wall 2 while the first solar panel 10 is supported in part by the first support structure 100, and in part by an operator.

The first solar panel 10 is mounted on the first support structure 100 so that, by virtue of housing 153b, tab 151 couples with an inner upper edge 12a of frame 12 of the first solar panel 10 itself, at a vertex of the same. In the view in figure 7, tab 151 is coupled with the inner edge of frame 12 close to the vertex at the top left of frame 12 itself.

The first solar panel 10 is mounted on the second support structure 200 so that, by virtue of housing 153a, tab 150 couples with the inner upper edge 12a of frame 12 of the first solar panel 10, at the other upper vertex of frame 12. In the view in figure 7, tab 150 is coupled with edge 12a close to the vertex at the top right of frame 12.

Thereafter, the position of plate 173 is manually adjusted so that the same is coupled to the vertex which is located on the same side of the vertex to which tab 151 is coupled. In particular, plate 173 is made to slide on tab 161 until it comes into abutment against the inner surface of frame 12. Through the clamping elements 178, 179, plate 173 is then fixed in the position reached.

Likewise, the position of plate 172 is manually adjusted so that the same is coupled to the vertex which is located on the same side of the vertex to which tab 150 is coupled. In particular, plate 172 is made to slide on tab 160 until it comes into abutment against the inner surface of frame 12. Through the clamping elements 176, 177, plate 172 is then fixed in the position reached.

The second solar panel 20 is then mounted in the same manner.

Preferably, the third support structure 300 is fixed first. The second solar panel 20 is then mounted in such a way that the inner upper edge 22a of frame 22 rests onto tab 151 of the second support structure 200 and onto tab 150 of the third support structure 300, by virtue of the respective housings 153b, 153a. Plate 173 of the second support structure 200 and plate 172 of the third support structure 300 are then adjusted and fixed so as to also constrain the second solar panel 20 safely and reliably.

The invention therefore achieves important advantages.

Firstly, the apparatus according to the invention allows the solar panels to be fixed to a vertical wall in a quick, simple and reliable manner.

Moreover, the apparatus according to the invention has a structure of low complexity and reduced production costs.

## Claims

1. Apparatus for the conversion of solar energy comprising:
a. at least a first solar panel (10) and a second solar panel (20);
b. a support structure (100) supporting said first solar panel (10) and said second solar panel (20),
wherein said support structure (100) comprises:
i. a first fixing portion (110), having a substantially planar development and provided with a through hole (111) for accommodating a tie rod for fastening to a vertical wall;
ii. a first arm (120), having a first end (120a) hinged to said first fixing portion (110), and a second end (120b);
iii. a second arm (130), having a first end (130a) hinged to the second end (120b) of said first arm (120), and a second end (130b);
iv. a second fixing portion (140) hinged to the second end (130b) of said second arm (130), wherein said second fixing portion (140) has a substantially planar development and is provided with a through hole (141) for accommodating a tie rod for fastening to a vertical wall.

2. Apparatus according to claim 1, wherein said first fixing portion (110), said first arm (120), said second arm (130) and said second fixing portion (140) are designed as box-shaped elements, preferably of aluminium.

3. Apparatus according to claim 1 or 2, wherein said support structure (100) comprises a first pair of tabs (150, 151) extending from opposite sides of said first arm (120), and a second pair of tabs (160, 161) extending from opposite sides of said first arm (120).

4. Apparatus according to claim 3, wherein the tabs (150, 151) of said first pair of tabs are made in one piece, and the tabs (160, 161) of said second pair of tabs are made in one piece.

5. Apparatus according to claim 3 or 4, wherein the tabs (150, 151; 160, 161) of each pair of tabs are joined by a fitting (152, 162), said fitting (152, 162) being substantially shaped as a "U" and counter-shaped to part of the outer contour of said first arm (120).

6. Apparatus according to any one of claims 3 to 6, wherein said first arm (120) has an upper wall (121), two lateral walls (122, 123) and a lower wall (124), wherein the first pair of tabs (150, 151) and the second pair of tabs (160, 161) are substantially parallel and non-coplanar with respect to said upper wall (121).

7. Apparatus according to claim 5, wherein said first arm (120) has an upper wall (121), two lateral walls (122, 123) and a lower wall (124), wherein said fitting (152, 162) is counter-shaped to said lateral walls (122, 123) and said lower wall (124).

8. Apparatus according to any one of claims 5 to 7, wherein each of the tabs (150, 151) of said first pair of tabs has an engagement portion (150a, 151a) constrained to a respective engagement portion (152a, 152b) of said fitting (152), and a free portion (150b, 151b) which defines, in cooperation with a corresponding portion (120c, 120d) of said first arm (120), a housing (153a, 153b) in which a frame (12, 22) of said first or second solar panel (10, 20) is inserted.

9. Apparatus according to any one of the preceding claims, wherein said support structure (100) comprises a pair of adapter elements (170, 171), each of said adapter elements (170, 171) being mounted on a respective tab (160, 161) of said second pair of tabs and being movable with respect to said respective tab (160, 161).

10. Apparatus according to claim 9, wherein each of said adapter elements (170, 171) comprises:
a. a plate (172, 173) having a through recess (174, 175);
b. a pair of clamping elements (176, 177; 178, 179), inserted in said recess (174, 175) and in respective through holes (163, 164; 165, 166) formed in said corresponding tab (160, 161).

11. Apparatus according to claim 10, wherein each of said plates (172, 173) has a retainer portion (172a, 173a), preferably made through a bending, at an axial end thereof.

12. Apparatus according to any one of the preceding claims, wherein each of said first solar panel (10) and second solar panel (20) comprises:
a. an operating portion (11, 21) adapted to receive solar radiation and convert the same into heat and/or electricity;
b. a frame (12, 22), supporting said operating portion (11, 21).

13. Apparatus according to claims 8 and 12, wherein said frame (12, 22) is partially inserted in said housing (153a, 153b).

14. Method for installing an apparatus (1) for the conversion of solar energy, comprising:
a. arranging a first support structure (100) comprising:
i. a first fixing portion (110), having a substantially planar development and provided with a through hole (111);
ii. a first arm (120), having a first end (120a) hinged to said first fixing portion (110), and a second end (120b);
iii. a second arm (130), having a first end (130a) hinged to the second end (120b) of said first arm (120), and a second end (130b);
iv. a second fixing portion (140) hinged to the second end (130b) of said second arm (130), wherein said second fixing portion (140) has a substantially planar development and is provided with a through hole (141);
b. insert a fixing tie rod (180) in the through hole (111) of said first fixing portion (110), so as to fix said first fixing portion (110) to a vertical wall;
c. insert a fixing tie rod (190) in the through hole (141) of said second fixing portion (140), so as to fix said second fixing portion (140) to a vertical wall;
d. mounting a first solar panel (10) and a second solar panel (20) on said support structure (100).

15. Method according to claim 14, wherein each of said first solar panel (10) and second solar panel (20) comprises: an operating portion (11, 21) adapted to receive solar radiation and convert the same into heat and/or electricity, and a frame (12, 22), supporting said operating portion (11, 21); wherein said method comprises:
arranging a first pair of tabs (150, 151) extending from opposite sides of said first arm (120), and a second pair of tabs (160, 161) extending from opposite sides of said first arm (120), the tabs of each pair of tabs (150, 151; 160, 161) being joined by a fitting (152, 162), said fitting (152, 162) being substantially shaped as a "U" and counter-shaped to part of the outer contour of said first arm (120);
wherein each of said tabs (150, 151) of said first pair of tabs has an engagement portion (150a, 151a) constrained to a respective engagement portion (152a, 152b) of said fitting (152), and a free portion (150b, 151b) which defines, in cooperation with a corresponding portion (120c, 120d) of said first arm (120), a housing (153a, 153b);
and wherein:
mounting said first solar panel (10) on said support structure (100) comprises inserting the frame (12) of said first solar panel (10) in said housing (153a), and
mounting said second solar panel (20) on said support structure (100) comprises inserting the frame (22) of said second solar panel (20) in said housing (153b).
